Europäisches Patentamt

European Patent Office

Office européen des brevets

(19)

(11) **EP 1 221 589 A2**

(12) **EUROPÄISCHE PATENTANMELDUNG**

(43) Veröffentlichungstag:
**10.07.2002  Patentblatt 2002/28**

(51) Int Cl.⁷: **G01D 5/16**

(21) Anmeldenummer: **01129147.3**

(22) Anmeldetag: **08.12.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **04.01.2001  DE 10100299**

(71) Anmelder: **ROBERT BOSCH GMBH
70442 Stuttgart (DE)**

(72) Erfinder:
• **Dukart, Anton
  70839 Gerlingen (DE)**
• **Arndt, Dietmar, Dr.
  71706 Markgroeningen (DE)**

(54) **Messanordnung in einem Wälzlager zur Detektierung physikalischer Grössen**

(57)    Die Erfindung betrifft eine Messanordnung in einem Wälzlager (1) zur Detektierung physikalischer Größen mittels an oder in einer Lagerschale (4, 5) des Wälzlagers (1) angeordneten Sensoren (7, 8, 7a, 8a, 7b, 8b, 7c, 8c), dadurch gekennzeichnet, dass mindestens ein Paar einander zugeordnete dehnungsempfindlicher Sensorelemente (7, 8) in Umfangsrichtung der Lagerschale (4, 5) in einem Winkelabstand voneinander angebracht ist, der annähernd 1/4 des Winkelabstandes der im Wälzlager (1) befindlichen Wälzkörper (6) beträgt (Figur 2).

Fig.2

EP 1 221 589 A2

**Beschreibung**

Stand der Technik

Die Erfindung betrifft eine Messanordnung in einem Wälzlager zur Detektierung physikalischer Größen mittels an oder in einer Lagerschale des Wälzlagers angeordneten Sensoren.

Eine derartige Messanordnung ist beispielsweise aus EP 0 929 707 A1 bekannt, bei der innerhalb eines Kugelwälzlagers ein Drehzahlsensor angeordnet ist. Die Kugelwälzlager bieten hier einen sehr vorteilhaften, geschützten Einbauraum für entsprechende Sensoren. Durch eine Integration der Sensorik in das Kugellager entsteht außerdem eine erhebliche System- und Montagevereinfachung.

Die Robert Bosch GmbH untersucht seit einiger Zeit den Kraftfluss in Radlagern von Kraftfahrzeugen. Ziel dieser Studien ist die Messung der Kräfte und der Momente, die von der Straße über das Rad und über das Lager auf das Fahrwerk übertragen werden.

So beschreibt die noch unveröffentlichte DE 100 41 098.7 (Anmeldetag 22. August 2000) dieser Anmelderin eine Messanordnung an einem Wälzlager, insbesondere Radlager eines Kraftfahrzeugs, die mindestens einen Dehnungsmessstreifen an der Lagerschale des Wälzlagers aufweist, und zwar an der feststehenden Lagerschale, die bei neueren Radlagern in der Regel die äußere Lagerschale ist.

Im Rahmen der Entwicklungsarbeiten fand man heraus, dass mit den auf der Lagerschale angebrachten Dehnungsmessstreifen die Position der einzelnen Kugeln bestimmt werden kann. Da der Widerstandswert der Dehnungsmessstreifen an die lokale mechanische Spannung in dem Substrat des Sensors gekoppelt ist und diese lokale Spannung mit der Position der einzelnen Kugeln im Lager variiert, ist auch im Falle einer konstanten Lagerkraft oder eines konstanten Moments das am Dehnungsmessstreifen abgreifbare Spannungssignal mit einer sinusförmigen Signalmodulation überlagert.

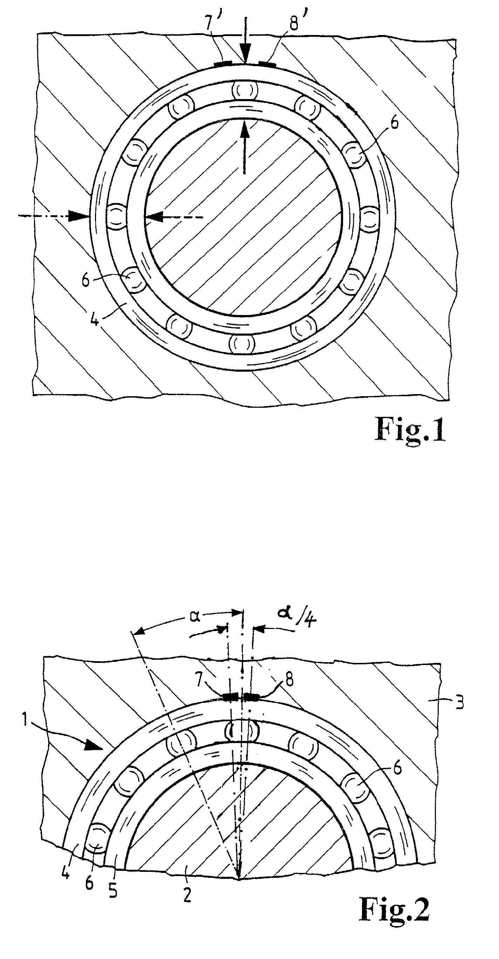

Die ebenfalls am 22. August 2000 angemeldete (unveröffentlichte) DE 100 41 093.6 dieser Anmelderin beschreibt ebenfalls eine Sensoranordnung in einem Kugellager, die auf der Basis der ermittelten Kugelgeschwindigkeit und der am Lager angreifenden Kräfte und Momente ein Maß für die Raddrehzahl ableitet. Eine der darin vorgeschlagenen Messanordnungen, die in der beiliegenden Figur 1 dargestellt ist, verwendet zwei zu einer gemeinsamen Sensoreinheit zusammengefasste Dehnungsmessstreifen 7' und 8', die an der äußeren, feststehenden Lagerschale 4 eines Kugellagers in einem gegenseitigen Winkelabstand angebracht sind, der etwa dem halben Winkelabstand α der im Kugellager befindlichen Kugeln 6 entspricht. Die durch die an den beiden Dehnungsmessstreifen 7' und 8' vorbeilaufenden Kugeln 6 verursachte Spannungsmodulation ist bei der in Figur 1 gezeigten Anordnung um etwa 180° phasenverschoben. Aus der erfassten Änderung des Gesamtwiderstandes der zusammengefassten Dehnungsmessstreifen 7' und 8' kann auf die auf das Lager einwirkenden Kräfte (siehe Pfeile) geschlossen werden. Über das Modulationssignal, das in geeigneter Weise zwischen den beiden Dehnungsmessstreifen 7' und 8' abgegriffen wird, kann auf die Kugelgeschwindigkeit und somit auf die Raddrehzahl geschlossen werden. Allerdings gibt es bei diesem Verfahren keine Möglichkeit, die Laufrichtung der Kugeln und somit die des Rades zu ermitteln.

Aufgabe und Vorteile der Erfindung

Es ist Aufgabe der Erfindung, die eingangs genannte Messanordnung so auszubilden, dass sie außer der Raddrehzahl und der im Radlager auftretenden Kräfte und Momente auch die Laufrichtung der Wälzkörper (Kugeln) und somit des im Wälzlager abgestützten Bauteils und weitere physikalische Größen, die durch die Wälzkörper im Wälzlager übertragbar sind, erfassen kann.

Die Erfindung schlägt zur Lösung dieser Aufgabe eine neuartige Messanordnung vor, bei der mindestens ein Paar einander zugeordneter dehnungsempfindlicher Sensorelemente in Umfangsrichtung einer Lagerschale in einem gegenseitigen Winkelabstand angebracht ist, der annähernd 1/4 des (nominell als konstant angenommenen) Winkelabstands der im Wälzlager befindlichen Wälzkörper beträgt.

Auf diese Weise entsteht zwischen den Modulationssignalen, die von den einzelnen Dehnungsmessstreifen eines Paares erfassbar sind, eine Phasendifferenz von annähernd 90°. Entspricht der Winkelabstand der beiden Sensorelemente genau einem Viertel des Winkelabstandes der Wälzkörper, ergibt die Modulation eines Sensorelements dann eine Sinusfunktion und die Modulation des zugeordneten anderen Sensorelements eine Cosinusfunktion. Aus der Kenntnis der Amplitude der Modulation kann man mittels eines solchen Sensorelementepaars eindeutig auf die Phasenposition der Kugeln bezüglich der Sensorelemente zurückrechnen.

Bevorzugt sind die Sensorelemente an der feststehenden Lagerschale des Wälzlagers angebracht. Dies bringt den Vorteil mit sich, dass die von den Sensorelementen erfassten Signale prinzipiell ohne eine drahtlose Funk- oder Lichtsignalübertragungsstrecke ableitbar sind.

Bevorzugt sind die Sensorelemente Dehnungsmessstreifen oder in einem Substrat integrierte Widerstandselemente, die ihren Widerstandswert beim Auftreten mechanischer Spannungen ändern.

In einer bevorzugten Ausführungsform der erfindungsgemäßen Messanordnung sind mehrere Paare einander zugeordneter Sensorelemente in Umfangsrichtung der Lagerschale versetzt angeordnet, z.B. in der 12-Uhr-Position und in der 9-Uhr-Position. Wenn, wie die Erfindung weiterhin vorschlägt, das Wälzlager eine ungerade Anzahl Wälzkörper hat, ist immer gewährleistet, dass die Signale von den Sensorelementen der 12-Uhr-Position und die Signale von den Sensorelementen in der 9-Uhr-Position einen gegenseitigen Phasenversatz von 90° bzw. 270° haben. Mit dieser Messanordnung ist auch eine eindeutige Bestimmung der Laufrichtung erreicht.

Wenn dagegen bei einer alternativen Ausführungsform eine gerade Anzahl von Wälzkörpern vorgesehen ist, wie z.B. 10, 12, 14, 16, 18 Wälzkörpern, lässt sich auch hier die Laufrichtung eindeutig bestimmen, wenn, wie die Erfindung vorschlägt, der gegenseitige Winkelversatz der in der 12-Uhr-Position (oder 6-Uhr-Position) angebrachten Sensorelementpaare und der in der 9-Uhr-Position (oder 3-Uhr-Position) angebrachten Sensorelementpaare etwas von 90° abweicht.

Eine bevorzugte Ausführungsform der erfindungsgemäßen Messanordnung sieht demnach, wenn das Wälzlager eine gerade Anzahl Wälzkörper aufweist, ein Sensorpaar genau an der 12-Uhr-Position und/oder an der 6-Uhr-Position und wenigstens ein weiteres Sensorpaar vor, das geringfügig gegenüber der 3-Uhr-Position und/oder 9-Uhr-Position winkelversetzt ist.

Alternativ kann ein Sensorpaar genau an der 3-Uhr-Position und/oder an der 9-Uhr-Position und mindestens ein weiteres Sensorpaar an einer gegenüber der 12-Uhr-Position und/oder der 6-Uhr-Position etwas winkelversetzten Stelle angeordnet sein. In den beiden letztgenannten Ausführungsformen bekommt man zwar ein gewisses Übersprechen der Signale, aber die Laufrichtung der Kugeln ist über die Beobachtung der Phasenbeziehungen feststellbar. Das zusätzliche Übersprechen lässt sich mit einer geeigneten Signalverarbeitung herausfiltern.

Die Erfindung schlägt außerdem eine Auswerteeinrichtung vor, die die von den beiden Sensorelementen eines Sensorpaars erzeugten Signale empfängt und aus der zuvor erhaltenen Kenntnis der Amplitude der Modulation die relative Phasenposition jedes Wälzkörpers bezogen auf die Sensorelemente ermittelt. Aus dieser relativen Phasenposition kann eindeutig auf die Laufrichtung der im Wälzlager geführten Bauteile geschlossen werden.

Außerdem kann die Auswerteeinrichtung aus der ermittelten relativen Phasenposition der Modulationssignale der Sensorelemente eines Sensorelementpaares den gegenseitigen Winkelabstand der Wälzkörper im Wälzlager überwachen. Dann kann die Auswerteeinrichtung das Spiel der Wälzkörper im Lagerkäfig bestimmen und damit Käfigschäden feststellen.

Da bei der vorgeschlagenen Messanordnung der Abstand der einander zugeordneten, benachbarten Sensorelemente, insbesondere Dehnungsmessstreifen oder Widerstandselemente geringer als bei einer Messanordnung ist, bei der die Paare der Sensorelemente in einem gegenseitigen Abstand angeordnet sind, der dem halben Wälzkörperabstand im Wälzlager entspricht, kann ein die beiden Sensorelemente zusammenfassendes oder integrierendes Messelement wesentlich kostengünstiger ausfallen, da das Paar der Messelemente als integrierte Einheit realisiert werden kann. In diesem Fall kann vorteilhafterweise die Auswerteeinrichtung zusammen mit dem Paar der zugehörigen Sensorelemente in einem Substrat integriert sein.

Eine erfindungsgemäße Messanordnung, wie sie oben beschrieben wurde, kann besonders günstig als Drehzahlfühler und Drehrichtungsfühler zur Ermittlung der Raddrehzahl und Laufrichtung des betreffenden Rades im Kraftfahrzeug eingesetzt werden. Selbstverständlich lassen sich mit der erfindungsgemäßen Messanordnung auch andere physikalische Größen, d. h. insbesondere die in x-, y- und z-Richtung auf das Radlager einwirkenden Kräfte und Momente erfassen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich alleine oder zu mehreren in Form von Unterkombinationen bei den Ausführungsbeispielen der Erfindung und auf anderen Gebieten verwirklicht sein und vorteilhafte, sowie für sich schutzfähige Ausführungen darstellen können, für die hier Schutz beansprucht wird.

Zeichnung

Ausführungsbeispiele einer erfindungsgemäßen Messanordnung werden anhand der Zeichnung erläutert. Es zeigen:

Figur 1 in schematischem Querschnitt die bereits beschriebene Messanordnung gemäß der erwähnten früheren Patentanmeldung;

Figur 2 im Querschnitt eine Teilansicht eines mit der erfindungsgemäßen Messanordnung ausgestatteten Wälzlagers mit zwei um ⫾ Winkelabstand der Wälzkörper versetzten Sensorelementen;

Figur 3 eine schematische Darstellung, die eine Phasenbeziehung der einzelnen, einander zugeordneten Sensorelemente eines Sensorelementpaares während einer Periode eines vorbeilaufenden Wälzkörpers verdeutlicht, wobei oben die den Gegenstand der früheren Patentanmeldung bildende Konfiguration und unten die erfindungsgemäße neue Konfiguration dargestellt ist; und

Figur 4 ein Ausführungsbeispiel mit mehreren am Umfang einer Lagerschale eines Wälzlagers befestigten und winkelversetzten Sensorelementpaaren in der erfindungsgemäßen Konfiguration.

Ausführungsbeispiele

Figur 2 zeigt vereinfacht einen Abschnitt eines Querschnitts eines Wälzlagers 1 für eine drehende Radachse 2, wobei diese Anordnung in ein Fahrzeugchassis 3 fest eingefügt ist. Eine feststehende (äußere) Lagerschale 4 sitzt am Chassis 3, und die mitdrehende (innere) Lagerschale 5 befindet sich an der Radachse 2. Im Wälzlager 1 befinden sich außerdem die Wälzkörper, im Beispiel Kugeln 6. Es ist deutlich, dass zur Vereinfachung in Figur 2 ein die Kugeln 6 führender Käfig nicht dargestellt ist.

An oder in der äußeren feststehenden Lagerschale 4 sind paarweise einander zugeordnete Sensorelemente 7 und 8 angeordnet, mit denen eine Detektierung physikalischer Größen im Lager ausführbar ist. Die einander zugeordneten Sensorelemente 7 und 8 sind in einem gegenseitigen Winkelabstand $\alpha/4$ angeordnet, der 1/4 des Winkelabstands $\alpha$ der Kugeln 6 zueinander beträgt.

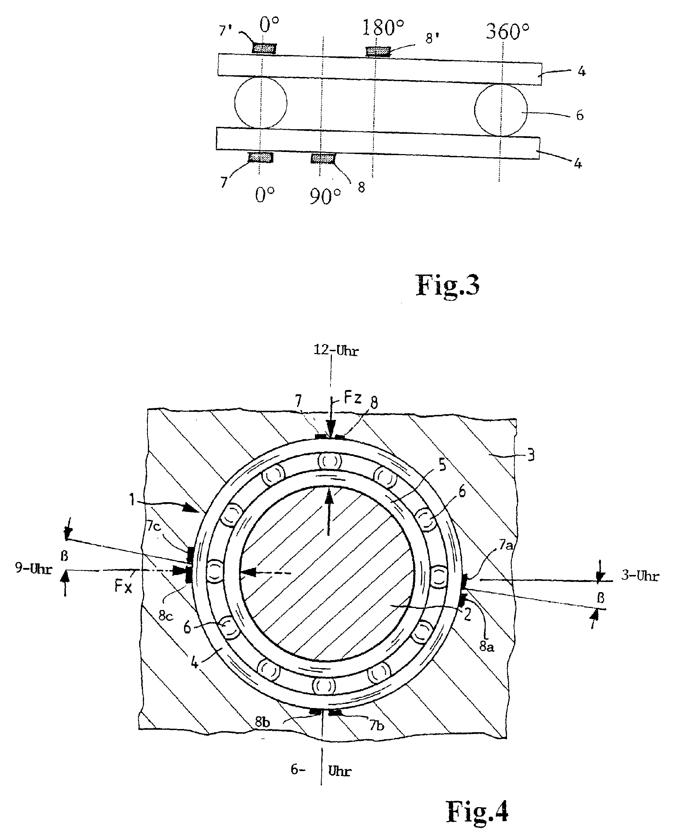

Figur 3 veranschaulicht die Phasenbeziehungen der Sensorelemente eines Paars bezüglich einer Kugelperiode, und zwar ist im oberen Teil die in der genannten früheren Patentanmeldung der Anmelderin vorgeschlagene Sensorkonfiguration und im unteren Teil der Figur 3 die erfindungsgemäße neue Anordnung dargestellt. Bei der erfindungsgemäßen Anordnung, bei der die zu einem Paar gehörigen Sensorelemente 7 und 8 in Umfangsrichtung der Lagerschale in einen Winkelabstand gegeneinander versetzt angeordnet sind, der einem Viertel des als konstant angenommenen Kugelabstandes entspricht, entsteht durch die Modulation der vorbeibewegten Kugeln 6 zwischen den an den beiden Sensorelementen abgegriffenen Ausgangssignalen eine Phasendifferenz von 90°. Die Modulation eines Sensors (z.B. 7) entspricht dann einer Sinusfunktion, die des anderen Sensorelements (z.B. 8) einer Cosinusfunktion. Aus der Kenntnis der Amplitude der Modulation kann man somit mittels eines derartigen Sensorpaares 7, 8 eindeutig auf die Phasenposition der Kugeln 6 bezüglich der Sensorelemente 7, 8 zurückrechnen.

Das dem modulierten Widerstandswert (Rt) eines auf der Lagerschale 4 angebrachten Dehnungsmesswiderstandes (Sensorelement) 7 oder 8 entsprechende Sensorsignal ergibt sich näherungsweise wie folgt:

$$R(t) = A0 + A1 * \sin(\omega t) + \ldots$$

Terme höherer Ordnung (z.B. quadratische, kubische oder höhere harmonische Terme: $2\omega$, $3\omega$, ...).

Der Koeffizient A0 verändert sich in erster Näherung proportional zur mittleren lokalen Spannung, also zu der Kraft F, die auf das gesamte Wälzlager einwirkt. Proportional hierzu verändert sich auch der Koeffizient A1, der die Amplitude der Modulation darstellt. Die Kopplung dieser Koeffizienten kann aber auch durchaus komplizierter sein und kann durch die Funktionen

$$A0 = f(F)$$

$$A1 = g(F)$$

beschrieben werden. Wesentlich ist nur, dass die Funktionen f und g bekannt sind.

Bei der in Figur 3 oben dargestellten Konfiguration, die der früheren Patentanmeldung DE 100 41 093.6 der Anmelderin entspricht, wird ausgenutzt, dass die Modulation der Signale bei einem Sensorpaar 7', 8' gegenphasig (um 180°) versetzt ist. Bei der Summe beider Signale tritt demnach keine Modulation mehr auf, und deshalb ist die Laufrichtung der Kugel nicht bestimmbar.

Durch die in Figur 2 und Figur 3 unten dargestellte erfindungsgemäße Konfiguration der Sensorelemente 7 und 8 entsteht, wie erwähnt, ein Phasenversatz zwischen den Signalen von 90°. Die Modulation eines Sensors entspricht dann einer Sinusfunktion und die Modulation des anderen Sensors einer Cosinusfunktion. Aus der Kenntnis der Amplitude der Modulation kann man somit mittels eines Sensorelementepaares eindeutig auf die Phasenposition der Kugeln bezüglich der Sensorelemente schließen.

Die Genauigkeit der Ortsbestimmung der Kugeln ist erfindungsgemäß unabhängig von der augenblicklichen Phasenlage der Kugeln zur Sensoreinheit, und die Ortsbestimmung arbeitet auch im Stillstandsfall.

Der Algorithmus zur Bestimmung der Raddrehzahl kann zusätzlich noch Korrekturterme beinhalten, die von den jeweiligen, auf das Lager wirkenden Kräfte, abhängen, da sich die Kontaktstellen der Kugeln im Radlager kraftabhängig verändern. Die Kugeldrehzahl nk kann wie folgt berechnet werden:

$$nk = (1 \pm dw * \cos(\gamma)/T) * (n/2)$$

hierin geben an:

- dw den Durchmesser der Wälzkörper,
- $\gamma$ den Betriebswinkel,
- T den Teilkreisdurchmesser und
- n die Drehzahl des Prüfstandes.

Der Betriebswinkel $\gamma$ ist 90°, falls sich die Kugeln zwischen zwei ebenen Flächen bewegen. Liegen Kugeln zwischen zwei Zylinderflächen, ist $\gamma = 0°$. Bei in einem Versuch verwendeten Kugellagern betrug dieser Winkel ca. 35°. Das Minuszeichen gilt für den Fall des rotierenden Innenrings, das Pluszeichen für den Fall des rotierenden Außenrings. Die in der obigen Gleichung kraftabhängige Größe ist der Betriebswinkel $\gamma$ (F).

Nachstehend wird die Struktur eines möglichen Auswertealgorithmus einer in der Erfindung vorgeschlagenen Auswerteeinrichtung angeführt:

- Mit Hilfe eines Schätzers werden die künftigen Kugelpositionen bestimmt und mit den von den Sensorelementen erfassten Signalen aktualisiert. Dazu sind unter Umständen mehrere Iterationsschritte notwendig.

- Aus den Signalen der Sensorelemente der nun bekannten Kugelposition werden die Kräfte des Wälzlagers berechnet.

- Aus den berechneten Kräften und den Signalen von den Sensorelementen werden wiederum die Kugelpositionen, die Kugeldrehzahl und die Laufrichtung bestimmt.

- Über die berechneten Radkräfte und mit der ermittelten Kugeldrehzahl kann entsprechend der obigen Gleichung auf die Radgeschwindigkeit (Drehzahl des Rads) geschlossen werden.

Bei den in der oben genannten DE 100 41 093.6 beschriebenen Messverfahren sind die Paare der Sensorelemente beispielsweise genau auf der 12-Uhr-, der 3-Uhr-, 6-Uhr- und 9-Uhr-Position angebracht. So sind die Sensorelementpaare auf der 12-Uhr-Position und der 6-Uhr-Position besonders empfindlich gegenüber Kräften Fz in vertikaler Richtung (z-Richtung), jene Sensorelementpaare in der 3-Uhr-Position oder 9-Uhr-Position hingegen für horizontale Kräfte Fx in x-Richtung. Im Idealfall gäbe es weder ein Übersprechen von Kraftsignalen der Kräfte Fx auf die Signale der Sensorelementpaare in der 12-Uhr-Position oder der 6-Uhr-Position, noch eine Beeinflussung der Messdaten von den Sensorpaaren in der 3-Uhr-Position oder der 9-Uhr-Position durch y-Kräfte (Kräfte in Axialrichtung der Radachse).

Bei Lagern mit einer geraden, aber nicht durch Vier teilbaren Anzahl von Kugeln (2, 6, 10, 14, 18, ...) hat man besonders günstige Verhältnisse. Wird ein Sensorelementpaar entsprechend der oben erwähnten DE 100 41 093.6 auf einer Lagerschale im Wälzlager bei der 9-Uhr- und eines bei der 12-Uhr-Position angebracht, sollten im Idealfall die einzelnen Gesamtwiderstände nur für x- oder y-Kräfte sensibel sein. Leider gibt es dabei den Nachteil, dass die Modulationen der Messsignale aufgrund der Kugelpositionen gerade gegenphasig sind. Damit kann man leider keine Aussagen über die Umlaufrichtung der Kugeln machen.

Bei Lagern mit einer Kugelanzahl, die durch Vier teilbar ist, ist die Modulation gleichphasig. Somit gewinnt man in beiden Fällen durch Beobachtung der Modulation keine Information über die Laufrichtung des Lagers.

Eine Ausführungsform der Erfindung schlägt deshalb vor, eine ungerade Anzahl von Wälzkörpern (ungerade Kugelzahl) zu verwenden. Dabei ist immer gewährleistet, dass die Signale von der 12-Uhr-Position und der 9-Uhr-Position um 90° bzw. 270° gegeneinander phasenversetzt sind. Dies erlaubt eine eindeutige Bestimmung der Laufrichtung des Rades.

Die beiliegende Figur 4 zeigt eine andere Ausführungsform der erfindungsgemäßen Messanordnung, bei der mehrere, im Beispiel vier, Paare einander zugeordneter Sensorelemente 7, 8; 7a, 8a; 7b, 8b; und 7c, 8c in Umfangsrichtung versetzt auf der äußeren Lagerschale 4 eines Wälzlagers mit einer geraden Anzahl (12) von Wälzkörpern angeordnet sind. Im dargestellten Beispiel liegen die Sensorelementpaare 7, 8 und 7b, 8b genau auf der 12-Uhr-Position und der 6-Uhr-Position, während die Sensorelementpaare 7a, 8a und 7c, 8c um einen (kleinen) Winkel β jeweils gegenüber der 3-Uhr-Position und der 9-Uhr-Position versetzt sind.

Eine nicht dargestellte Modifikation würde zwei einander gegenüberliegende Sensorelementpaare genau auf der 3-Uhr-Position und der 9-Uhr-Position vorsehen, während zwei weitere einander gegenüberliegende Sensorelementpaare jeweils um einen (kleinen) Winkel β gegenüber der 12-Uhr-Position und der 6-Uhr-Position versetzt angeordnet sind. Durch die in Figur 4 gezeigte Messanordnung bekommt man zwar ein Übersprechen der Kraftsignale, aber die Laufrichtung der Kugeln ist über die Beobachtung der Phasenbeziehungen feststellbar. Das zusätzliche Übersprechen der Kraftsignale lässt sich mit einer geeigneten Signalverarbeitung ausfiltern.

Außer den oben beschriebenen physikalischen Größen des Radlagers lässt sich mit Hilfe der erfindungsgemäßen Messanordnung und mit einer entsprechend eingerichteten Auswerteeinrichtung mittels der erfassten relativen Phasenposition jedes Wälzkörpers bezogen auf die Sensorelemente auch der Kugelabstand im Lager überwachen. Dadurch kann man das Spiel der Kugeln im Käfig bestimmen und damit Käfigschäden feststellen.

Da der Abstand zwischen zwei benachbarten Sensorelementen oder Dehnungsmessstreifen bei der erfindungsgemäßen Messanordnung nur einen viertel Kugelabstand beträgt, können die paarweise einander zugeordneten Sensorelemente zu einer Messeinheit zusammengefasst bzw. integriert werden, so dass die gesamte Messanordnung sehr kostengünstig zu realisieren ist. Weiterhin lässt sich zumindest ein Teil der Auswerteeinrichtung zusammen mit den beiden einander paarweise zugeordneten Sensorelementen oder Dehnungsmessstreifen auf einem Substrat integrieren.

**Patentansprüche**

1. Messanordnung in einem Wälzlager (1) zur Detektierung physikalischer Größen mittels an oder in einer Lagerschale (4, 5) des Lagers (1) des Wälzlagers (1) angeordneten Sensoren (7, 8; 7a, 8a; 7b, 8b; 7c, 8c), **dadurch gekennzeichnet, dass** mindestens ein Paar einander zugeordneter dehnungsempfindlicher Sensorelemente (7, 8) in Umfangsrichtung der Lagerschale (4, 5) in einem Winkelabstand voneinander angebracht ist, der annähernd 1/4 des Winkelabstandes der im Wälzlager (1) befindlichen Wälzkörper (6) beträgt.

2. Messanordnung nach Anspruch 1, **dadurch gekennzeichnet, dass** das wenigstens ein Sensorelementpaar (7, 8) an der feststehenden Lagerschale (4) des Wälzlagers (1) angebracht ist.

3. Messanordnung nach Anspruch 1 oder 2, **dadurch gekennzeichnet, dass** die Sensorelemente Dehnungsmessstreifen sind.

4. Messanordnung nach einem der vorangehenden Ansprüche, **dadurch gekennzeichnet, dass** das Wälzlager (1) eine ungerade Anzahl Wälzkörper (6) hat.

5. Messanordnung nach einem der Ansprüche 1 bis 3, **dadurch gekennzeichnet, dass** das Wälzlager (1) eine gerade Anzahl Wälzkörper (6) hat.

6. Messanordnung nach Anspruch 5, **dadurch gekennzeichnet, dass** mehrere Paare (7, 8; 7a, 8a; 7b, 8b; 7c, 8c) der einander zugeordneten Sensorelemente in Umfangsrichtung der äußeren Lagerschale versetzt angeordnet sind.

7. Messanordnung nach Anspruch 6, **dadurch gekennzeichnet, dass** ein Sensorelementpaar (7, 8; 7b, 8b) an der 12-Uhr-Position und/oder an der 6-Uhr-Position und wenigstens ein weiteres Sensorelementpaar an einer Position am Umfang der Lagerschale angebracht ist, die gegenüber der 3-Uhr-Position und/oder der 9-Uhr-Position etwas winkelversetzt ist.

8. Messanordnung nach Anspruch 6, **dadurch gekennzeichnet, dass** ein Sensorelementpaar genau an der 3-Uhr-Position und/oder der 9-Uhr-Position und wenigstens ein weiteres Sensorelementpaar an einer Position auf der Lagerschale angebracht ist, die etwas gegenüber der 12-Uhr-Position und/oder der 6-Uhr-Position winkelversetzt ist.

9. Messanordnung nach einem der vorangehenden Ansprüche, **dadurch gekennzeichnet, dass** eine Auswerteeinrichtung die von den Sensorelementen jedes Sensorelementpaars erzeugten Signale empfängt und dazu eingerichtet ist, abhängig von einer während des Laufs der im Wälzlager (1) geführten Bauteile (2) bei der Vorbeibewegung jedes Wälzkörpers am Sensorelementpaar verursachte Modulation der Sensorsignale und aus der zuvor erhaltenen Kenntnis der Amplitude der Modulation die relative Phasenposition jedes Wälzkörpers (6) bezogen auf die Sensorelemente (7, 8) zu ermitteln.

10. Messanordnung nach Anspruch 9, **dadurch gekennzeichnet, dass** die Auswerteeinrichtung aus der Modulation der Sensorsignale auch die Laufrichtung der im Wälzlager (1) geführten Bauteile (2) bestimmt.

11. Messanordnung nach Anspruch 9 oder 10, **dadurch gekennzeichnet, dass** die Auswerteeinrichtung durch Auswertung der Modulation der Sensorsignale auch einen gegenseitigen Abstand der Wälzkörper ermittelt und aus dem so ermittelten Abstand der Wälzkörper mit Hilfe eines zuvor ermittelten nominellen Spiels derselben zu einer Überwachung des Zustands eins Lagerkäfigs eingerichtet ist.

12. Messanordnung nach einem der Ansprüche 9 bis 11, **dadurch gekennzeichnet, dass** ein Teil der Auswerteeinrichtung auf einem Substrat zusammen mit einem Paar der Sensorelemente integriert ist.

13. Kraft-, Drehzahl- und Drehrichtungsfühler zur Ermittlung von Lagerkräften, der Raddrehzahl und Drehrichtung eines Rads am Kraftfahrzeug, **gekennzeichnet durch** eine Messanordnung nach einem der Ansprüche 1 bis 12.

Fig.1

Fig.2

**Fig.3**

**Fig.4**